# EUROPÄISCHE PATENTSCHRIFT

(11) **EP 3 871 858 B1**
(45) Veröffentlichungstag und Bekanntmachung des Hinweises auf die Patenterteilung: **19.07.2023**
(21) Anmeldenummer: 21168190.3
(22) Anmeldetag: 02.12.2016
(51) Int. Cl.: B29C 64/364, B29C 64/153, B29C 64/393, B29C 64/386, B22F 10/28, B22F 10/38, B22F 12/90

(54) **VORRICHTUNG UND VERFAHREN ZUR GENERATIVEN HERSTELLUNG EINES DREIDIMENSIONALEN OBJEKTS**
DEVICE AND PROCESS FOR GENERATIVE MANUFACTURE OF AT LEAST ONE THREE-DIMENSIONAL OBJECT
DISPOSITIF ET PROCÉDÉ DE FABRICATION GÉNÉRATIVE D'UN OBJET TRIDIMENSIONNEL

(30) Priorität: 14.12.2015 DE 102015121748
(43) Veröffentlichungstag der Anmeldung: 01.09.2021
(62) Teilanmeldung aus: 16805434.4
(73) Patentinhaber: Concept Laser GmbH, 96215 Lichtenfels (DE)
(72) Erfinder: Herzog, Frank Carsten, 96215 Lichtenfels (DE)
(74) Vertreter: Hafner & Kohl PartmbB

(56) Entgegenhaltungen:
- WO-A1-2009/072935
- DE-A1-102014 000 022
- JP-B1- 5 721 887
- US-A1- 2006 192 322
- US-A1- 2013 193 620

## Beschreibung

Die Erfindung betrifft eine Vorrichtung zur generativen Herstellung eines dreidimensionalen Objekts durch sukzessive schichtweise selektive Verfestigung von Baumaterialschichten aus verfestigbarem Baumaterial vermittels wenigstens eines Energiestrahls, umfassend wenigstens eine Einrichtung zur Erzeugung wenigstens eines Energiestrahls zur schichtweisen selektiven Verfestigung einzelner Baumaterialschichten aus verfestigbarem Baumaterial, und eine Strömungseinrichtung zur Erzeugung einer eine Prozesskammer der Vorrichtung zumindest abschnittsweise durchströmenden Fluidströmung.

Derartige Vorrichtungen sind zur generativen Herstellung dreidimensionaler Objekte bekannt. Vermittels entsprechenden Vorrichtungen werden dreidimensionale Objekte durch sukzessive schichtweise selektive Verfestigung von in einer Bauebene aufgebrachten Baumaterialschichten aus verfestigbarem Baumaterial in jeweiligen Querschnittsbereichen der jeweils herzustellenden Objekte entsprechenden Bereichen vermittels eines Energie- bzw. Laserstrahls generativ aufgebaut.

Es ist weiter bekannt, wie zum Beispiel aus der JP5721887 B1, entsprechende Vorrichtungen mit Strömungseinrichtungen zur Erzeugung einer eine Prozesskammer der Vorrichtung zumindest abschnittsweise durchströmenden Fluidströmung auszustatten. Über entsprechende Strömungseinrichtungen erzeugte Fluidströmungen dienen insbesondere dazu, die bei der im Rahmen generativer Bauprozesse erfolgenden selektiven Verfestigung einzelner Baumaterialschichten entstehenden Prozessgase, d. h. z. B. Schmauch- oder Rauchgase, aus der Prozesskammer abzuführen.

Es besteht ein Bedarf dahin, den Betrieb entsprechender Strömungseinrichtungen im Hinblick auf eine verbesserte, d. h. insbesondere bedarfsgerecht anpassbare, Erzeugung entsprechender Fluidströmungen weiterzuentwickeln.

Der Erfindung liegt die Aufgabe zugrunde, eine verbesserte Vorrichtung zur generativen Herstellung dreidimensionaler Objekte anzugeben.

Die Aufgabe wird durch die Gegenstände der unabhängigen Ansprüche gelöst. Die abhängigen Ansprüche betreffen besondere Ausführungsformen der Vorrichtung.

Die hierin beschriebene Vorrichtung dient im Allgemeinen der additiven bzw. generativen Herstellung wenigstens eines dreidimensionalen Objekts, d. h. beispielsweise eines technischen Bauteils bzw. einer technischen Bauteilgruppe, durch sukzessives schichtweises selektives Verfestigen einzelner Baumaterialschichten aus einem verfestigbaren Baumaterial vermittels wenigstens eines von wenigstens einer Energiestrahlerzeugungseinrichtung erzeugten Energiestrahls. Bei dem Energiestrahl kann es sich um einen Laserstrahl handeln, bei der Vorrichtung kann es sich entsprechend um eine Vorrichtung zur Durchführung selektiver Laserschmelzverfahren (SLM-Verfahren) oder selektiver Lasersinterverfahren (SLS-Verfahren) handeln.

Die sukzessive schichtweise selektive Verfestigung jeweils zu verfestigender Baumaterialschichten erfolgt auf Grundlage von objektbezogenen Baudaten. Entsprechende Baudaten beschreiben im Allgemeinen die geometrisch-konstruktive Gestalt des generativ herzustellenden dreidimensionalen Objekts (im Weiteren abgekürzt als "Objekt" bezeichnet). Entsprechende Baudaten können beispielsweise CAD-Daten des herzustellenden Objekts sein bzw. solche beinhalten.

Die Vorrichtung umfasst die typischerweise erforderlichen Funktionskomponenten zur Durchführung generativer Bauprozesse, d. h. insbesondere eine Energiestrahlerzeugungseinrichtung, welche zur Erzeugung wenigstens eines Energiestrahls zur sukzessiven schichtweisen selektiven Verfestigung einzelner Baumaterialschichten aus einem verfestigbaren Baumaterial, d. h. insbesondere einem pulverförmigen Metall-, Kunststoff- und/oder Keramikmaterial, eingerichtet ist, und eine Beschichtereinrichtung, welche zur Ausbildung zu verfestigender Baumaterialschichten in einer Bauebene eingerichtet ist.

Bei einer Bauebene kann es sich um eine Oberfläche eines, typischerweise (in vertikaler Richtung) bewegbar gelagerten, Trägerelements einer Trägereinrichtung oder um eine bereits selektiv verfestigte Baumaterialschicht handeln. Im Allgemeinen sind in einer Bauebene selektiv zu verfestigende bzw. selektiv verfestigte Baumaterialschichten ausgebildet.

Die Vorrichtung umfasst eine Strömungseinrichtung, welche zur Erzeugung einer eine Bau- oder Prozesskammer der Vorrichtung, in welcher Bau- oder Prozesskammer generative Bauprozesse durchgeführt werden, zumindest abschnittsweise durchströmenden Fluidströmung eingerichtet ist. Die Strömungseinrichtung dient insbesondere dazu, die bei der im Rahmen generativer Bauprozesse erfolgenden selektiven Verfestigung von Baumaterialschichten entstehenden Prozessgase, d. h. insbesondere Schmauch- oder Rauchgase, in einer entsprechenden Fluidströmung aus der Prozesskammer der Vorrichtung abzuführen. Die Strömungseinrichtung kann zur Erzeugung einer entsprechenden Fluidströmung z. B. als eine Gebläseeinrichtung ausgebildet sein oder wenigstens eine solche umfassen. Bei der von der Strömungseinrichtung erzeugbaren Fluidströmung kann es sich demnach z. B. um eine Gebläseströmung handeln.

Die Fluidströmung wird durch wenigstens ein Strömungsfluid gebildet; bei dem die Fluidströmung bildenden Strömungsfluid handelt es sich typischerweise um ein Inertgas(gemisch), z. B. auf Basis von Argon, Stickstoff, Kohlenstoffdioxid, etc. Demnach handelt es bei einer entsprechenden Fluidströmung typischerweise um eine Inertgasströmung.

Es ist denkbar, dass die Vorrichtung ferner eine Absaugeinrichtung umfasst, welche dazu eingerichtet ist, eine aus der Prozesskammer abzuführende Fluidströmung aus der Prozesskammer abzusaugen. Die Absaugeinrichtung kann demnach zur Erzeugung einer Saugströmung eingerichtet sein.

Die Vorrichtung umfasst weiterhin eine Erfassungseinrichtung, welche zur Erfassung einer wenigstens einen physikalischen Parameter und/oder wenigstens einen chemischen Parameter der Fluidströmung angebenden oder beschreibenden Strömungsinformation eingerichtet ist. Auf Grundlage der vermittels der Erfassungseinrichtung erfassten Strömungsinformation sind sonach unterschiedliche physikalische und/oder chemische Informationen über die Fluidströmung erhältlich.

Wie erwähnt, beschreibt die Strömungsinformation unterschiedliche physikalische und/oder chemische Parameter der Fluidströmung. Die Strömungsinformation kann als physikalische Parameter der Fluidströmung bzw. des Strömungsfluids insbesondere Dichte, Druck, Temperatur der Fluidströmung sowie diverse Strömungsparameter, d. h. insbesondere die Art der Strömung (zur Beurteilung der Frage, ob eine laminare oder turbulente Strömung vorliegt), die Strömungsgeschwindigkeit, das auf eine bestimmte Strömungs(querschnitts)fläche bezogene Strömungsprofil, beschreiben. Die physikalischen Parameter können durch die Strömungsinformation unmittelbar oder mittelbar, d. h. über eine in die jeweilig zu beschreibende Größe umwandelbare Zwischengröße, beschrieben sein. Über die physikalischen Parameter lassen sich Rückschlüsse z. B. auf die Effizienz der Abführung der im Rahmen generativer Bauprozesse entstehenden Prozessgase aus der Prozesskammer der Vorrichtung ziehen. Eine in ihrem Strömungsverlauf ansteigende Dichte oder Temperatur der Fluidströmung bzw. des Strömungsfluids kann z. B. auf die Ansammlung entsprechender Prozessgase in dem Strömungsfluid und somit auf eine effiziente Abführung dieser aus der Prozesskammer hinweisen.

Die Strömungsinformation kann als chemische Parameter der Fluidströmung bzw. des Strömungsfluids insbesondere die anteilsmäßige chemische Zusammensetzung der Fluidströmung bzw. des Strömungsfluids beschreiben. Die chemischen Parameter können durch die Strömungsinformation unmittelbar oder mittelbar, d. h. über eine in die jeweilig zu beschreibende Größe umwandelbare Zwischengröße, beschrieben sein. Über die chemischen Parameter lassen sich ebenso Rückschlüsse auf die Effizienz der Abführung der im Rahmen generativer Bauprozesse entstehenden Prozessgase aus der Prozesskammer der Vorrichtung ziehen. Eine in ihrem Strömungsverlauf veränderliche anteilsmäßige chemische Zusammensetzung der Fluidströmung bzw. des Strömungsfluids in Form einer Erhöhung des Anteils entsprechender Prozessgasbestandteile kann z. B. auf die Ansammlung entsprechender Prozessgase in der Fluidströmung bzw. in dem Strömungsfluid und somit auf eine effiziente Abführung dieser aus der Prozesskammer hinweisen.

In jedem Fall ist durch die Erfassung der Strömungsinformation eine quantitative und/oder qualitative Beurteilung der Abführung entsprechender Prozessgase aus der Prozesskammer möglich. Wie sich im Weiteren ergibt, kann auf Grundlage dieser Beurteilung bedarfsgerecht eine manuelle, teil- oder vollautomatisierte Anpassung diverser Parameter der Fluidströmung respektive eine Anpassung des Betriebs der Strömungseinrichtung, gegebenenfalls auch der Betriebs eines Absaugeinrichtung, sofern vorhanden, erfolgen. Insbesondere kann ein Regel- oder Steuerkreis implementiert werden, über welchen die Abführung entsprechender Prozessgase aus der Prozesskammer im Hinblick auf eine vorgebbare oder vorgegebene Regel- oder Steuergröße geregelt bzw. gesteuert wird.

Die Vorrichtung kann eine Ausgabeeinrichtung zur Ausgabe einer Visualisierungsinformation, welche die über die Erfassungseinrichtung erfassten Strömungsinformationen visualisiert, umfassen. Erfasste Strömungsinformationen können sonach über eine entsprechende Ausgabeeinrichtung, welche z. B. als ein Display ausgebildet ist oder wenigstens ein solches umfasst, ausgegeben und einem Benutzer der Vorrichtung zur Anzeige gebracht werden. Die Visualisierungsinformation kann ein graphisches, insbesondere farbiges, Abbild einzelner, mehrerer oder sämtlicher erfasster physikalischer und/oder chemischer Parameter beinhalten. Veränderungen einzelner, mehrerer oder sämtlicher erfasster physikalischer und/oder chemischer Parameter können graphisch, insbesondere farbig, dargestellt werden. Die Darstellung von Veränderungen erfasster physikalischer und/oder chemischer Parameter kann ähnlich einem aus Wetterprognosen bekannten "Regenradar" realisiert sein; eine Visualisierung kann z. B. derart erfolgen, dass die (Strömung der) Fluidströmung durch die Prozesskammer, gegebenenfalls mit graphisch hervorgehobenem veränderlichem Prozessgasanteil, dargestellt wird.

Die Erfassungseinrichtung ist im Hinblick auf die über diese jeweils zu erfassenden physikalischen und/oder chemischen Parameter der Fluidströmung mit geeigneten, insbesondere (mess)sondenartigen, Erfassungselementen ausgestattet. Im Hinblick auf die erfassbaren bzw. zu erfassenden Parameter handelt es sich bei entsprechenden Erfassungselementen grundsätzlich um an sich bekannte Messelemente bzw. Messelementgruppen oder -anordnungen; die Erfassung der Temperatur eines Strömungsfluids kann z. B. vermittels an sich bekannter Temperaturmesselemente, die Erfassung der Strömungsgeschwindigkeit des Strömungsfluids z. B. vermittels an sich bekannter mechanisch oder optisch oder elektromagnetisch wirkender Erfassungselemente, z. B. als Bestandteil einer Durchflussmesseinrichtung, einer Laser-Doppler-Anemometrie-Einrichtung, einer Radareinrichtung, einer Ultraschalleinrichtung, etc., erfolgen.

Die über jeweilige Erfassungselemente erfassten Parameter können datenmäßig an eine der Erfassungseinrichtung zugehörige Datenverarbeitungs- oder Steuereinrichtung übertragen und dort z. B. datenmäßig aufbereitet werden, um sie einem entsprechenden Regel- oder Steuerkreis zuzuführen und in diesem verwenden zu können.

Entsprechende Erfassungselemente sind typischerweise in der Prozesskammer angeordnet. Je nach funktionellem bzw. konstruktivem Aufbau können die Erfassungselemente zumindest abschnittsweise unmittelbar in die Fluidströmung geschaltet sein, sodass die Fluidströmung diese zumindest abschnittsweise unmittelbar umströmt.

Einzelne, mehrere oder sämtliche Erfassungselemente können in wenigstens einem Bewegungsfreiheitsgrad bewegbar gelagert sein. Einzelne, mehrere oder sämtliche Erfassungselemente können z. B. zwischen einer ersten Position innerhalb der Prozesskammer, bei welcher Position es sich um eine Betriebsposition, in welcher eine Erfassung entsprechender Parameter der Fluidströmung möglich ist, handeln kann, und wenigstens einer weiteren Position innerhalb der Prozesskammer, bei welcher es sich (ebenso) um eine Betriebsposition, in welcher eine Erfassung entsprechender Parameter der Fluidströmung möglich ist, oder um eine Nicht-Betriebsposition, in welcher eine Erfassung entsprechender Parameter der Fluidströmung nicht möglich ist, handeln kann, bewegbar gelagert sein. Alternativ oder ergänzend ist es denkbar, dass einzelne, mehrere oder sämtliche Erfassungselemente zwischen einer ersten Position innerhalb der Prozesskammer, bei welcher Position es sich um eine Betriebsposition, in welcher eine Erfassung entsprechender Parameter der Fluidströmung möglich ist, handeln kann, und einer weiteren Position außerhalb der Prozesskammer, bei welcher Position es sich um eine Nicht-Betriebsposition, in welcher eine Erfassung entsprechender Parameter der Fluidströmung nicht möglich ist, handeln kann, bewegbar gelagert sind. Durch eine bewegbare Lagerung entsprechender Erfassungselemente ist es möglich, entsprechende Parameter der Fluidströmung bzw. des Strömungsfluids an unterschiedlichen Stellen innerhalb der Prozesskammer zu erfassen. Derart lässt sich z. B. eine orts- und/oder zeitaufgelöste Erfassung bzw. Beurteilung entsprechender Parameter, d. h. insbesondere auch orts- und/oder zeitaufgelöste Veränderungen jeweils erfasster Parameter, darstellen.

Bewegungen eines Erfassungselements können sowohl translatorische als auch rotatorische Bewegungsfreiheitsgrade umfassen. Selbstverständlich sind kombinierte Bewegungen in unterschiedlichen Bewegungsfreiheitsgraden möglich. Zur Realisierung entlang einer bestimmten Bewegungsbahn geführter Bewegungen eines Erfassungselements kann eine geeignete, d. h. z. B. rollen- und/oder schienenartige, Führungselemente umfassende Führungseinrichtung vorhanden sein. Die bewegbare Lagerung eines Erfassungselements kann durch einen, z. B. (elektro)motorischen, Bewegungsantrieb, vermittels welchem das Erfassungselement in wenigstens einem Bewegungsfreiheitsgrad bewegbar ist, realisiert sein.

Zweckmäßig kann wenigstens ein bewegbar gelagertes Erfassungselement gemeinsam mit wenigstens einer weiteren in wenigstens einem Bewegungsfreiheitsgrad bewegbar gelagerten Funktionskomponente der Vorrichtung bewegbar sein. Zwischen dem bewegbar gelagerten Erfassungselement und der bewegbar gelagerten Funktionskomponente der Vorrichtung besteht eine unmittelbare oder mittelbare, d. h. unter Zwischenschaltung wenigstens eines weiteren Bauteils realisierte, Bewegungskopplung. Die Bewegungskopplung resultiert typischerweise in einer gleichförmigen Bewegung des jeweiligen Erfassungselements und der Funktionskomponente. Bei einer entsprechenden Funktionskomponente kann es sich z. B. um eine relativ zu einer zu beschichtenden Bauebene bewegbar gelagerte Beschichtereinrichtung handeln.

Die Strömungseinrichtung umfasst wenigstens ein Diffusorelement zur Erzeugung eines gleichmäßigen oder vergleichmäßigten, insbesondere laminaren, Strömungsprofils der Fluidströmung. Ein entsprechendes Diffusorelement weist mehrere von einem Strömungsfluid durchströmbare Strömungsöffnungen auf. Einzelne, mehrere oder sämtliche Strömungsöffnungen können wabenartig ausgebildet und/oder angeordnet sein. Eine wabenartige Ausbildung und/oder Anordnung entsprechender Strömungsöffnungen wirkt sich positiv auf die Erzeugung eines gleichmäßigen oder vergleichmäßigten, insbesondere laminaren, Strömungsprofils der Fluidströmung aus.

Unabhängig von der konkreten konstruktiven Ausgestaltung eines Diffusorelements ist dieses in wenigstens einem Bewegungsfreiheitsgrad bewegbar gelagert. Bewegungen eines Diffusorelements können sowohl translatorische als auch rotatorische Bewegungsfreiheitsgrade umfassen. Selbstverständlich sind kombinierte Bewegungen in unterschiedlichen Bewegungsfreiheitsgraden möglich. Zur Realisierung entlang einer bestimmten Bewegungsbahn geführter Bewegungen eines Diffusorelements kann eine geeignete, d. h. z. B. rollen- und/oder schienenartige, Führungselemente umfassende Führungseinrichtung vorhanden sein. Die bewegbare Lagerung eines Diffusorelements kann durch einen, z. B. (elektro)motorischen, Bewegungsantrieb, vermittels welchem das Diffusorelement in wenigstens einem Bewegungsfreiheitsgrad bewegbar ist, realisiert sein.

Ein bewegbar gelagertes Diffusorelement kann insbesondere zwischen einer Position innerhalb der Prozesskammer, bei welcher Position es sich um eine Betriebsposition, in welcher eine Vergleichmäßigung der Fluidströmung durch das Diffusorelement möglich ist, handelt, und einer Position außerhalb der Prozesskammer, bei welcher Position es sich um eine Nicht-Betriebsposition, in welcher eine Vergleichmäßigung der Fluidströmung durch das Diffusorelement nicht möglich ist, handelt, bewegbar gelagert sein. Eine Bewegung zwischen einer entsprechenden Betriebsposition innerhalb der Prozesskammer und einer entsprechenden Nicht-Betriebsposition außerhalb der Prozesskammer kann z. B. durch eine verschiebbare Lagerung eines Diffusorelements realisiert sein; das Diffusorelement ist durch ein Einschieben in die Prozesskammer bzw. durch Herausziehen aus der Prozesskammer zwischen der Betriebsposition und der Nicht-Betriebsposition bewegbar.

Sofern die Vorrichtung mehrere Diffusorelemente umfasst, können diese in Reihe geschaltet hintereinander angeordnet sein. Zwischen zwei unmittelbar benachbart angeordneten Diffusorelementen ist ein Strömungsraum gebildet. Durch geeignete Beabstandung jeweiliger Diffusorelemente lassen sich unterschiedlich dimensionierte Strömungsräume bilden. Über die Dimensionierung entsprechender Strömungsräume kann Einfluss auf diverse Strömungsparameter, d. h. insbesondere die Art der Strömung, der Fluidströmung genommen werden.

Wenigstens ein Diffusorelement kann in wenigstens einem Bewegungsfreiheitsgrad relativ zu wenigstens einem weiteren Diffusorelement bewegbar gelagert sein, wodurch der zwischen unmittelbar benachbart angeordneten Diffusorelementen gebildete Strömungsraum in seiner Dimensionierung, insbesondere in seinem Volumen, veränderbar ist. Wie erwähnt, kann über die Dimensionierung entsprechender Strömungsräume Einfluss auf diverse Strömungsparameter, d. h. insbesondere die Art der Strömung, der Fluidströmung genommen werden.

Es wurde erwähnt, dass Bewegungen eines Diffusorelements sowohl translatorische als auch rotatorische Bewegungsfreiheitsgrade umfassen können. Selbstverständlich sind kombinierte Bewegungen in unterschiedlichen Bewegungsfreiheitsgraden möglich. Die bewegbare Lagerung eines Diffusorelements kann, wie erwähnt, durch einen, z. B. (elektro)motorischen, Bewegungsantrieb, vermittels welchem das Diffusorelement in wenigstens einem Bewegungsfreiheitsgrad bewegbar ist, realisiert sein. Zur Realisierung entlang einer bestimmten Bewegungsbahn geführter Bewegungen eines Diffusorelements kann, wie erwähnt, eine geeignete, d. h. z. B. rollen- und/oder schienenartige, Führungselemente umfassende Führungseinrichtung vorhanden sein. Insbesondere für den Fall eines eine plattenartige bzw. -förmige geometrische Grundform aufweisenden Diffusorelements ist es denkbar, dieses um eine vertikale Achse rotierbar bzw. schwenkbar zu lagern, sodass es zwischen einer Betriebsposition, in welcher entsprechende Strömungsöffnungen in Strömungsrichtung der Fluidströmung ausgerichtet sind und eine Vergleichmäßigung der Fluidströmung möglich ist, und einer Nicht-Betriebsposition, in welcher entsprechende Strömungsöffnungen nicht in Strömungsrichtung der Fluidströmung ausgerichtet sind und eine Vergleichmäßigung der Fluidströmung nicht möglich ist, verdrehbar bzw. verschwenkbar ist.

Zwischen zwei unmittelbar benachbart angeordneten Diffusorelementen gebildete Strömungsräume können grundsätzlich eine beliebige (räumliche) geometrische Gestalt aufweisen. Die (räumliche) geometrische Gestalt eines jeweiligen Strömungsraums ist eine weitere Größe zur Beeinflussung diverser Strömungsparameter der Fluidströmung.

Ein jeweiliger Strömungsraum kann (neben entsprechenden unmittelbar benachbart angeordneten Diffusorelementen ferner) durch wenigstens ein sich zwischen zwei unmittelbar benachbart angeordneten Diffusorelementen erstreckendes Wandungselement begrenzt sein. Zur weiteren räumlichen Begrenzung jeweiliger Strömungsräume können sonach sich zwischen jeweiligen Diffusorelementen erstreckend angeordnete oder ausgebildete Wandungselemente vorgesehen sein. Entsprechende Wandungselemente können in wenigstens einem Bewegungsfreiheitsgrad bewegbar relativ zueinander und/oder relativ zu wenigstens einem Diffusorelement gelagert sein.

Bewegungen eines Wandungselements können sowohl translatorische als auch rotatorische Bewegungsfreiheitsgrade umfassen. Selbstverständlich sind kombinierte Bewegungen in unterschiedlichen Bewegungsfreiheitsgraden möglich. Die bewegbare Lagerung eines Wandungselements kann durch einen, z. B. (elektro)motorischen, Bewegungsantrieb, vermittels welchem das Wandungselement in wenigstens einem Bewegungsfreiheitsgrad bewegbar ist, realisiert sein. Zur Realisierung entlang einer bestimmten Bewegungsbahn geführter Bewegungen eines Wandungselements kann eine geeignete, d. h. z. B. rollen- und/oder schienenartige, Führungselemente umfassende Führungseinrichtung vorhanden sein.

Von besonderer Zweckmäßigkeit können Kipp- bzw. Schwenkbewegungen eines Wandungselements um eine horizontale Kipp- bzw. Schwenkachse sein, da derart trichterförmig verlaufende Strömungsräume ausgebildet werden können. Über sich trichterförmig erweiterbare bzw. erweiternde oder reduzierbare bzw. reduzierende Strömungsräume lässt sich gezielt Einfluss auf diverse Strömungsparameter der Fluidströmung, insbesondere die Art der Strömung und die Strömungsgeschwindigkeit, nehmen.

Die Vorrichtung umfasst zweckmäßig eine Regel- und/oder Steuereinrichtung, welche zur Regelung bzw. Steuerung der über die Strömungseinrichtung erzeugbaren oder erzeugten Fluidströmung eingerichtet ist. Die Regel- und/oder Steuereinrichtung ist zur Regelung oder Steuerung einer Bewegung des Diffusorelements in wenigstens einem Bewegungsfreiheitsgrad oder zu Regelung oder Steuerung des Betriebs der Strömungseinrichtung und zur Regelung oder Steuerung einer Bewegung des Diffusorelements in wenigstens einem Bewegungsfreiheitsgrad in Abhängigkeit einer von der Erfassungseinrichtung (12) erfassten Strömungsinformation eingerichtet.

Die Steuerung des Betriebs der Strömungseinrichtung ist insbesondere zur Regelung bzw. Steuerung wenigstens eines Strömungsparameters und/oder der anteilsmäßigen Zusammensetzung des Strömungsfluids, und/oder zur Steuerung von Bewegungen bewegbar gelagerter Wandungselemente in Abhängigkeit der erfassten Strömungsinformation eingerichtet. Selbstverständlich kann die Steuereinrichtung auch zur Steuerung des Betriebs einer entsprechenden Absaugeinrichtung, sofern vorhanden, eingerichtet sein.

Die Erfindung betrifft ferner ein Verfahren zur generativen Herstellung wenigstens eines dreidimensionalen Objekts durch sukzessive schichtweise selektive Verfestigung einzelner Baumaterialschichten aus verfestigbarem Baumaterial vermittels eines Energiestrahls. Das Verfahren zeichnet sich dadurch aus, dass zur generativen Herstellung des wenigstens einen Objekts eine wie beschriebene Vorrichtung verwendet wird. Verfahrensgemäß werden vermittels einer entsprechenden Erfassungseinrichtung entsprechende Strömungsinformationen erfasst. Sämtliche Ausführungen im Zusammenhang mit der Vorrichtung gelten analog für das Verfahren.

Die Erfindung ist anhand von Ausführungsbeispielen in den Zeichnungsfiguren näher erläutert. Dabei zeigen:

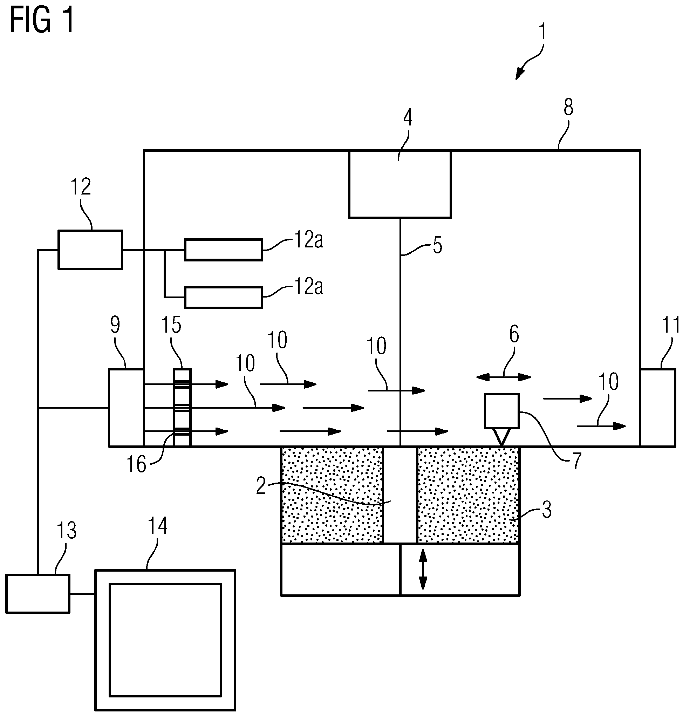

- Fig. 1 - 5: je eine Prinzipdarstellung einer Vorrichtung gemäß einem Ausführungsbeispiel der Erfindung.

Fig. 1 zeigt eine Prinzipdarstellung einer Vorrichtung 1 gemäß einem Ausführungsbeispiel. Die Vorrichtung 1 dient zur generativen Herstellung dreidimensionaler Objekte 2, d. h. z. B. technischer Bauteile bzw. technischer Bauteilgruppen, durch sukzessives schichtweises selektives Verfestigen von Baumaterialschichten aus einem verfestigbaren Baumaterial 3, d. h. z. B. um ein Metallpulver, vermittels wenigstens eines von einer Energiestrahlerzeugungseinrichtung 4 erzeugten Energiestrahls 5. Die sukzessive schichtweise selektive Verfestigung jeweiliger zu verfestigender Baumaterialschichten erfolgt derart, dass von der Energiestrahlerzeugungseinrichtung 4 erzeugte Energiestrahlen 5 selektiv auf jeweils zu verfestigende, jeweiligen schichtbezogenen Querschnittsgeometrien des herzustellenden Objekts 2 entsprechende Bereiche jeweiliger Baumaterialschichten gerichtet werden.

Die Vorrichtung 1 kann als elektrische Laserschmelz-Vorrichtung oder als selektive Lasersintervorrichtung ausgebildet sein. Entsprechend kann es sich bei der Energiestrahlerzeugungseinrichtung 4 um eine Laserstrahlerzeugungseinrichtung und bei einem Energiestrahl 5 entsprechend um einen Laserstrahl handeln. Eine Laserstrahlerzeugungseinrichtung kann eine oder mehrere Laserdioden zur jeweiligen Erzeugung eines Laserstrahls umfassen. Die Laserdioden können innerhalb oder außerhalb einer Prozesskammer 8 der Vorrichtung 1 angeordnet sein. Außerhalb der Prozesskammer 8 angeordnete Laserdioden sind mit geeigneten optischen Elementen, insbesondere in Form von Fokussieroptiken, innerhalb der Prozesskammer 8, z. B. über einen Lichtleiter, optisch zu koppeln.

Jeweilige zu verfestigende Baumaterialschichten werden vermittels einer, wie durch den horizontalen Doppelpfeil 6 angedeutet, bewegbar gelagerten Beschichtereinrichtung 7 in der Prozesskammer 8 der Vorrichtung 1 gebildet.

Die Vorrichtung 1 umfasst eine Strömungseinrichtung 9, welche zur Erzeugung einer die Prozesskammer 8 durchströmenden Fluidströmung (vgl. Pfeile 10) eingerichtet ist. Die Strömungseinrichtung 9 dient insbesondere dazu, die bei der im Rahmen generativer Bauprozesse erfolgenden selektiven Verfestigung von Baumaterialschichten entstehenden Prozessgase, d. h. insbesondere Schmauch- oder Rauchgase, in einer entsprechenden Fluidströmung 10 aus der Prozesskammer 8 abzuführen. Da es sich bei einem die Fluidströmung 10 bildenden Strömungsfluid typischerweise um ein Inertgas(gemisch) handelt, dient die Strömungseinrichtung 9 insbesondere auch dazu, innerhalb der Prozesskammer 8 eine inerte Atmosphäre auszubilden bzw. aufrechtzuerhalten.

Die Strömungseinrichtung 9 kann zur Erzeugung einer entsprechenden Fluidströmung 10 z. B. als eine Gebläseeinrichtung ausgebildet sein oder wenigstens eine solche umfassen. Bei der von der Strömungseinrichtung 9 erzeugbaren Fluidströmung 10 kann es sich demnach z. B. um eine Gebläseströmung handeln.

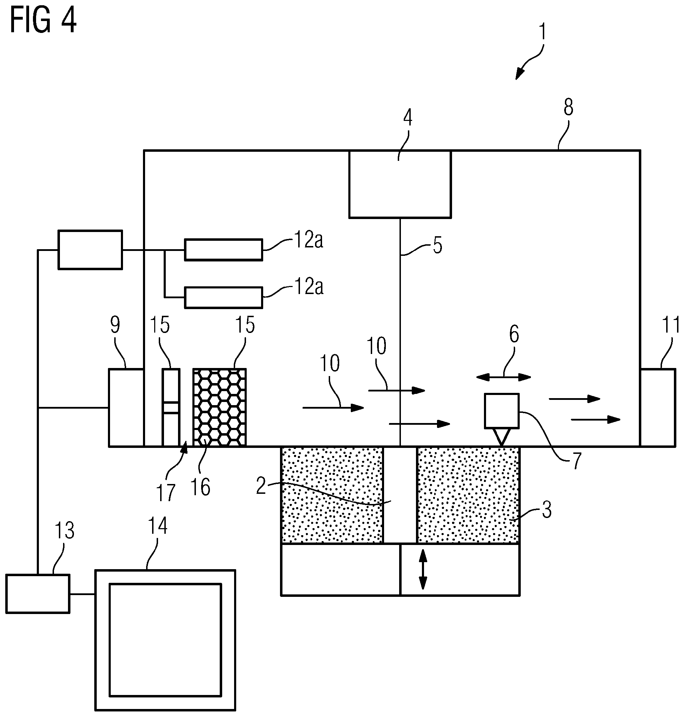

Der Strömungseinrichtung 10 ist ein Diffusorelement 15 zur Erzeugung eines gleichmäßigen oder vergleichmäßigten, insbesondere laminaren, Strömungsprofils der Fluidströmung 10 zugeordnet. Das Diffusorelement 15 weist mehrere Strömungsöffnungen 16 auf. Wenngleich in den Fig. aus Gründen der Übersichtlichkeit nicht überall dargestellt, ist jedes Diffusorelement 15 mit entsprechenden Strömungsöffnungen 16 versehen. Die Strömungsöffnungen 16 können wabenartig angeordnet und/oder ausgebildet sein (vgl. Fig. 4).

Das Diffusorelement 15 ist in wenigstens einem Bewegungsfreiheitsgrad bewegbar gelagert.

Bewegungen des Diffusorelements 15 können sowohl translatorische als auch rotatorische Bewegungsfreiheitsgrade umfassen. Kombinierte Bewegungen in unterschiedlichen Bewegungsfreiheitsgraden sind möglich. Zur Realisierung entlang einer bestimmten Bewegungsbahn geführter Bewegungen des Diffusorelements 15 kann eine geeignete, d. h. z. B. rollen- und/oder schienenartige, Führungselemente (nicht gezeigt) umfassende Führungseinrichtung (nicht gezeigt) vorhanden sein. Die bewegbare Lagerung des Diffusorelements 15 kann durch einen, z. B. (elektro)motorischen, Bewegungsantrieb (nicht gezeigt), vermittels welchem das Diffusorelement 15 in wenigstens einem Bewegungsfreiheitsgrad bewegbar ist, realisiert sein.

Ein bewegbar gelagertes Diffusorelement 15 kann zwischen einer Position innerhalb der Prozesskammer 8, bei welcher Position es sich um eine Betriebsposition, in welcher eine Vergleichmäßigung der Fluidströmung 10 durch das Diffusorelement 15 möglich ist, handelt, und einer Position innerhalb oder außerhalb der Prozesskammer 8, bei welcher Position es sich um eine Nicht-Betriebsposition, in welcher eine Vergleichmäßigung der Fluidströmung 10 durch das Diffusorelement 15 nicht möglich ist, handelt, bewegbar gelagert sein. Eine Bewegung zwischen einer Betriebsposition innerhalb der Prozesskammer 8 und einer Nicht-Betriebsposition außerhalb der Prozesskammer 8 kann z. B. durch eine verschiebbare Lagerung des Diffusorelements 15 realisiert sein; das Diffusorelement 15 ist durch Einschieben in die Prozesskammer 8 bzw. durch Herausziehen aus der Prozesskammer 8 zwischen der Betriebsposition und der Nicht-Betriebsposition bewegbar. Die Prozesskammer 8 kann hierfür mit einer abdichtbaren Öffnung (nicht gezeigt) versehen sein, über welche das Diffusorelement 15 in die Prozesskammer 8 hinein und aus der Prozesskammer 8 heraus bewegt werden kann.

Ein bewegbar gelagertes Diffusorelement 15 kann gemeinsam mit wenigstens einer weiteren in wenigstens einem Bewegungsfreiheitsgrad bewegbar gelagerten Funktionskomponente der Vorrichtung 1, wie z. B. der Beschichtereinrichtung 7, bewegbar sein. Zwischen dem bewegbar gelagerten Diffusorelement 15 und der bewegbar gelagerten Funktionskomponente besteht in diesem Falle eine unmittelbare oder mittelbare, d. h. unter Zwischenschaltung wenigstens eines weiteren Bauteils realisierte, Bewegungskopplung.

Der Strömungseinrichtung 9 in einer horizontalen Ebene gegenüber liegend kann optional eine Absaugeinrichtung 11 angeordnet sein, welche dazu eingerichtet ist, die aus der Prozesskammer 8 abzuführende Fluidströmung 10 aus der Prozesskammer 8 abzusaugen. Die Absaugeinrichtung 11 ist demnach zur Erzeugung einer Saugströmung eingerichtet.

In den in den Fig. gezeigten Ausführungsbeispielen ist die Strömungseinrichtung 9 bzw. die optionale Absaugeinrichtung 11 außerhalb der Prozesskammer 8 angeordnet. Die Strömungseinrichtung 9 ist über geeignete Leitungselemente (nicht gezeigt) mit der Prozesskammer 8 verbunden, um innerhalb der Prozesskammer 8 die diese zumindest abschnittsweise durchströmende Fluidströmung 10 zu erzeugen. Die Absaugeinrichtung 11 ist ebenso über geeignete Leitungselemente (nicht gezeigt) mit der Prozesskammer 8 verbunden, um die Saugströmung zu erzeugen. Die Strömungseinrichtung 9 und/oder die Absaugeinrichtung 11 könnten prinzipiell auch innerhalb der Prozesskammer 8 angeordnet sein.

Die Vorrichtung 1 umfasst weiterhin eine Erfassungseinrichtung 12, welche zur Erfassung einer wenigstens einen physikalischen Parameter und/oder wenigstens einen chemischen Parameter der Fluidströmung 10 angebenden oder beschreibenden Strömungsinformation eingerichtet ist. Auf Grundlage erfasster Strömungsinformationen sind sonach unterschiedliche physikalische und/oder chemische Informationen über die Fluidströmung 10 erhältlich.

Die Strömungsinformation kann als physikalische Parameter der Fluidströmung 10 bzw. des Strömungsfluids insbesondere Dichte, Druck, Temperatur der Fluidströmung 10 bzw. des Strömungsfluids sowie diverse Strömungsparameter, d. h. insbesondere die Art der Strömung (zur Beurteilung der Frage, ob eine laminare oder turbulente Strömung vorliegt), die Strömungsgeschwindigkeit, das auf eine bestimmte Strömungs(querschnitts)fläche bezogene Strömungsprofil, beschreiben. Über die physikalischen Parameter lassen sich Rückschlüsse auf die Effizienz der Abführung der im Rahmen generativer Bauprozesse entstehenden Prozessgase aus der Prozesskammer 8 ziehen. Eine in ihrem Strömungsverlauf ansteigende Dichte oder Temperatur der Fluidströmung 10 bzw. des Strömungsfluids kann z. B. auf die Ansammlung entsprechender Prozessgase in dem Strömungsfluid und somit auf eine effiziente Abführung dieser aus der Prozesskammer 8 hinweisen.

Die Strömungsinformation kann als chemische Parameter der Fluidströmung 10 bzw. des Strömungsfluids insbesondere die anteilsmäßige chemische Zusammensetzung der Fluidströmung 10 bzw. des Strömungsfluids beschreiben. Über die chemischen Parameter lassen sich ebenso Rückschlüsse auf die Effizienz der Abführung der im Rahmen generativer Bauprozesse entstehenden Prozessgase aus der Prozesskammer 8 ziehen. Eine in ihrem Strömungsverlauf veränderliche anteilsmäßige chemische Zusammensetzung der Fluidströmung 10 bzw. des Strömungsfluids in Form einer Erhöhung des Anteils entsprechender Prozessgasbestandteile kann z. B. auf die Ansammlung entsprechender Prozessgase in der Fluidströmung 10 bzw. in dem Strömungsfluid und somit auf eine effiziente Abführung dieser aus der Prozesskammer 8 hinweisen.

Die Erfassungseinrichtung 12 ist im Hinblick auf die über diese jeweils zu erfassenden physikalischen und/oder chemischen Parameter der Fluidströmung mit geeigneten, insbesondere (mess)sondenartigen, Erfassungselementen 12a ausgestattet. Im Hinblick auf die erfassbaren bzw. zu erfassenden Parameter handelt es sich bei entsprechenden Erfassungselementen 12a grundsätzlich um an sich bekannte Messelemente bzw. Messelementgruppen oder -anordnungen; die Erfassung der Temperatur der Fluidströmung 10 bzw. des Strömungsfluids kann z. B. vermittels an sich bekannter Temperaturmesselemente, die Erfassung der Strömungsgeschwindigkeit der Fluidströmung 10 bzw. des Strömungsfluids z. B. vermittels an sich bekannter mechanischer oder optischer Erfassungselemente 12a, z. B. als Bestandteil einer Durchflussmesseinrichtung, einer Laser-Doppler-Anemometrie-Einrichtung, einer Radareinrichtung, einer Ultraschalleinrichtung, etc., erfolgen.

In dem in den Fig. gezeigten Ausführungsbeispielen sind die Erfassungselemente 12a in der Prozesskammer 8 angeordnet. Je nach funktionellem bzw. konstruktivem Aufbau können die Erfassungselemente 12a zumindest abschnittsweise unmittelbar in die Fluidströmung 10 geschaltet sein, sodass die Fluidströmung 10 diese zumindest abschnittsweise unmittelbar umströmt.

Die Erfassungselemente 12a können in wenigstens einem Bewegungsfreiheitsgrad bewegbar gelagert sein. Die Erfassungselemente 12a können z. B. zwischen einer ersten Position innerhalb der Prozesskammer 8, bei welcher Position es sich um eine Betriebsposition, in welcher eine Erfassung entsprechender Parameter der Fluidströmung 10 möglich ist, handeln kann, und wenigstens einer weiteren Position innerhalb der Prozesskammer 8, bei welcher es sich (ebenso) um eine Betriebsposition, in welcher eine Erfassung entsprechender Parameter der Fluidströmung 10 möglich ist, oder um eine Nicht-Betriebsposition, in welcher eine Erfassung entsprechender Parameter der Fluidströmung 10 nicht möglich ist, handeln kann, bewegbar gelagert sein. Alternativ oder ergänzend ist es denkbar, dass die Erfassungselemente 12a zwischen einer ersten Position innerhalb der Prozesskammer 8, bei welcher Position es sich um eine Betriebsposition, in welcher eine Erfassung entsprechender Parameter der Fluidströmung 10 möglich ist, handeln kann, und einer weiteren Position außerhalb der Prozesskammer 8, bei welcher Position es sich um eine Nicht-Betriebsposition, in welcher eine Erfassung entsprechender Parameter der Fluidströmung 10 nicht möglich ist, handeln kann, bewegbar gelagert sind. Durch eine bewegbare Lagerung der Erfassungselemente 12a ist es möglich, entsprechende Parameter der Fluidströmung 10 bzw. des Strömungsfluids an unterschiedlichen Stellen innerhalb der Prozesskammer zu erfassen. Derart lässt sich z. B. eine orts- und/oder zeitaufgelöste Erfassung bzw. Beurteilung entsprechender Parameter, d. h. insbesondere auch orts- und/oder zeitaufgelöste Veränderungen jeweils erfasster Parameter, darstellen.

Analog einem bewegbar gelagerte Diffusorelement 15 kann auch ein bewegbar gelagertes Erfassungselement 12a gemeinsam mit wenigstens einer weiteren in wenigstens einem Bewegungsfreiheitsgrad bewegbar gelagerten Funktionskomponente der Vorrichtung 1, wie z. B. der Beschichtereinrichtung 7, bewegbar sein. Zwischen dem bewegbar gelagerten Erfassungselement 12a und der bewegbar gelagerten Funktionskomponente besteht in diesem Falle eine unmittelbare oder mittelbare, d. h. unter Zwischenschaltung wenigstens eines weiteren Bauteils realisierte, Bewegungskopplung.

In jedem Fall ist durch die Erfassungseinrichtung 12 eine quantitative und/oder qualitative Beurteilung der Abführung entsprechender Prozessgase aus der Prozesskammer 8 möglich. Auf Grundlage der Strömungsinformation kann bedarfsgerecht eine manuelle, teil- oder vollautomatisierte Anpassung diverser Parameter der Fluidströmung 10 respektive eine Anpassung des Betriebs der Strömungseinrichtung 9, gegebenenfalls auch des Betriebs der Absaugeinrichtung 11, sofern vorhanden, erfolgen. Insbesondere kann ein Regel- oder Steuerkreis implementiert werden, über welchen die Abführung entsprechender Prozessgase aus der Prozesskammer 8 im Hinblick auf eine vorgebbare oder vorgegebene Regel- oder Steuergröße geregelt bzw. gesteuert wird.

Die Implementierung eines entsprechenden Regel- oder Steuerkreises erfolgt über eine mit der Erfassungseinrichtung 12 kommunizierende Steuereinrichtung 13. Die Steuereinrichtung 13 umfasst geeignete hard- und/oder softwaremäßig implementierte Steuermittel (nicht gezeigt), d. h. z. B. Steueralgorithmen, vermittels welchen eine entsprechende Verarbeitung der Strömungsinformation und eine Erzeugung entsprechender Steuerinformationen auf Grundlage welcher die Abführung entsprechender Prozessgase aus der Prozesskammer 8 im Hinblick auf eine vorgebbare oder vorgegebene Regel- oder Steuergröße geregelt bzw. gesteuert wird, möglich ist.

Die Steuereinrichtung 13 kann datenmäßig mit einer Ausgabeeinrichtung 14 zur Ausgabe einer Visualisierungsinformation, welche die erfassten Strömungsinformationen visualisiert, verbunden sein.

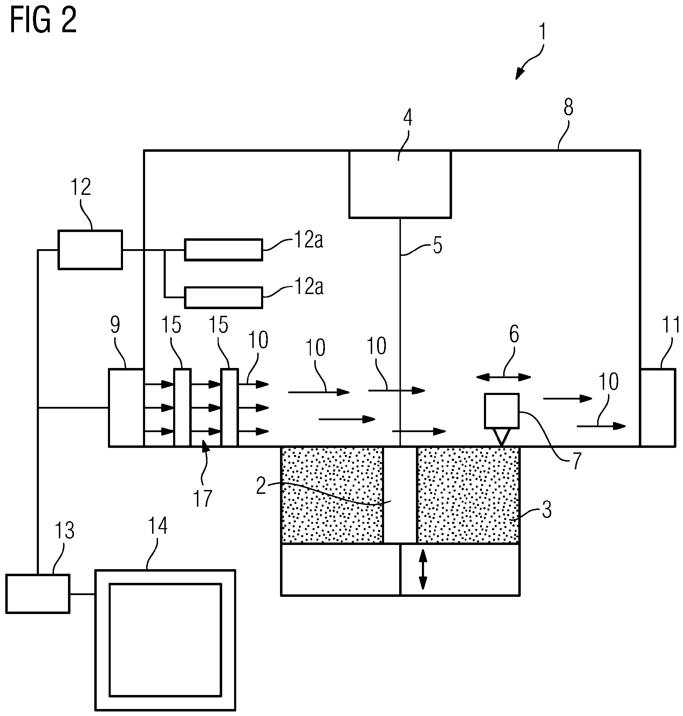

Die Erzeugung einer entsprechenden Visualisierungsinformation kann in der Steuereinrichtung 13 oder in der Ausgabeeinrichtung 14 erfolgen, welche hierfür jeweils mit geeigneten hard- und/oder softwaremäßigen Mitteln ausgestattet sind. Erfasste Strömungsinformationen können über die Ausgabeeinrichtung 14, welche z. B. als ein Display ausgebildet ist oder ein solches umfasst, ausgegeben und einem Benutzer der Vorrichtung 1 zur Anzeige gebracht werden. Die Visualisierungsinformation kann ein graphisches, insbesondere farbiges, Abbild erfasster physikalischer und/oder chemischer Parameter beinhalten. Veränderungen erfasster physikalischer und/oder chemischer Parameter können graphisch, insbesondere farbig, dargestellt werden. Die Darstellung von Veränderungen erfasster physikalischer und/oder chemischer Parameter kann ähnlich einem aus Wetterprognosen bekannten "Regen- oder Wetterradar" realisiert sein. Eine Visualisierung kann grundsätzlich z. B. derart erfolgen, dass die (Strömung der) Fluidströmung 10 durch die Prozesskammer 8, gegebenenfalls mit graphisch hervorgehobenem veränderlichem Prozessgasanteil, dargestellt wird. Fig. 2 zeigt eine Prinzipdarstellung einer Vorrichtung 1 gemäß einem weiteren Ausführungsbeispiel. Im Unterschied zu dem in Fig. 1 gezeigten Ausführungsbeispiel sind in dem in Fig. 2 gezeigten Ausführungsbeispiel mehrere Diffusorelemente 15 vorhanden. Die Diffusorelemente 15 sind in Reihe geschaltet hintereinander angeordnet. Zwischen zwei unmittelbar benachbart angeordneten Diffusorelementen 15 ist ein Strömungsraum 17 gebildet. Durch geeignete Beabstandung der Diffusorelemente 15 lassen sich unterschiedlich dimensionierte Strömungsräume 17 bilden. Über die Dimensionierung der Strömungsräume 17 kann Einfluss auf diverse Strömungsparameter, d. h. insbesondere die Art der Strömung, der Fluidströmung 10 genommen werden.

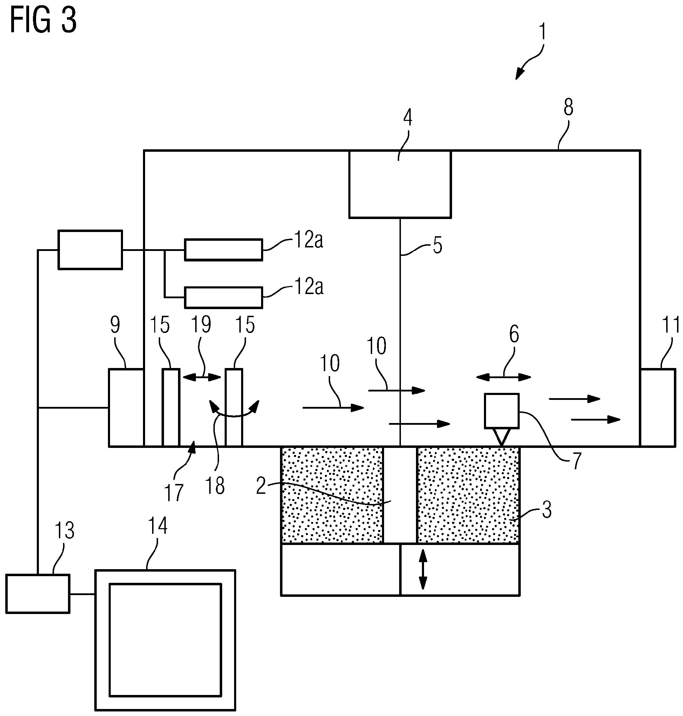

Die Fig. 3, 4 zeigen eine Prinzipdarstellung einer Vorrichtung 1 gemäß einem weiteren Ausführungsbeispiel. In dem in den Fig. 3, 4 gezeigten Ausführungsbeispiel ist gezeigt, dass wenigstens ein Diffusorelement 15 in wenigstens einem Bewegungsfreiheitsgrad relativ zu wenigstens einem weiteren Diffusorelement 15 bewegbar gelagert sein kann, wodurch der zwischen unmittelbar benachbart angeordneten Diffusorelementen 15 gebildete Strömungsraum 17 in seiner Dimensionierung, insbesondere in seinem Volumen, veränderbar ist. Wie erwähnt, kann über die Dimensionierung eines Strömungsraums 17 Einfluss auf diverse Strömungsparameter, d. h. insbesondere die Art der Strömung, der Fluidströmung 10 genommen werden.

Anhand der in Fig. 3 gezeigten Doppelpfeile 18, 19 ist ersichtlich, dass Bewegungen eines Diffusorelements 15 sowohl translatorische als auch rotatorische Bewegungsfreiheitsgrade umfassen können. Kombinierte Bewegungen in unterschiedlichen Bewegungsfreiheitsgraden sind möglich. Die bewegbare Lagerung eines Diffusorelements 15 kann, wie erwähnt, durch einen, z. B. (elektro)motorischen, Bewegungsantrieb, vermittels welchem das Diffusorelement 15 in wenigstens einem Bewegungsfreiheitsgrad bewegbar ist, realisiert sein. Zur Realisierung entlang einer bestimmten Bewegungsbahn geführter Bewegungen eines Diffusorelements 15 kann, wie erwähnt, eine geeignete, d. h. z. B. rollen- und/oder schienenartige, Führungselemente (nicht gezeigt) umfassende Führungseinrichtung (nicht gezeigt) vorhanden sein. Insbesondere für den in dem in Fig. 3, 4 gezeigten Ausführungsbeispiel gezeigten Fall von eine plattenartige bzw. -förmige geometrische Grundform aufweisenden Diffusorelementen 15 ist es denkbar, ein Diffusorelement 15 um eine vertikale Achse rotierbar bzw. schwenkbar zu lagern, sodass es zwischen einer Betriebsposition (vgl. Fig. 3), in welcher entsprechende Strömungsöffnungen 16 in Strömungsrichtung der Fluidströmung 10 ausgerichtet sind und eine Vergleichmäßigung der Fluidströmung 10 möglich ist, und einer Nicht-Betriebsposition (vgl. Fig. 4), in welcher entsprechende Strömungsöffnungen 16 nicht in Strömungsrichtung der Fluidströmung 10 ausgerichtet sind und eine Vergleichmäßigung der Fluidströmung 10 nicht möglich ist, verdrehbar bzw. verschwenkbar ist. In dem in den Fig. 3, 4 gezeigten Ausführungsbeispiel ist das rechte Diffusorelement 15 um eine vertikale Achse rotierbar bzw. schwenkbar gelagert.

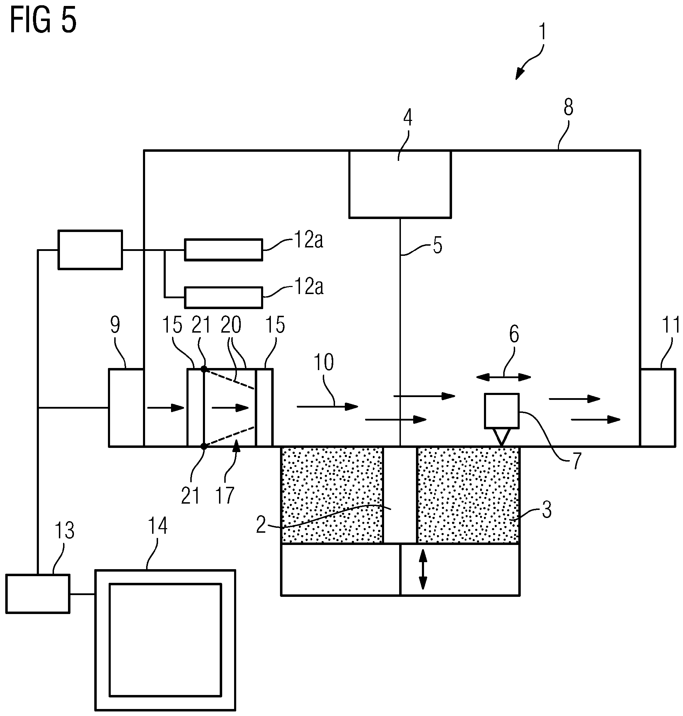

Fig. 5 zeigt eine Prinzipdarstellung einer Vorrichtung 1 gemäß einem weiteren Ausführungsbeispiel. Anhand des in Fig. 5 gezeigten Ausführungsbeispiels ist ersichtlich, dass ein Strömungsraum 17 neben entsprechenden unmittelbar benachbart angeordneten Diffusorelementen 15 ferner durch sich zwischen zwei unmittelbar benachbart angeordneten Diffusorelementen 15 (im Wesentlichen horizontal) erstreckende Wandungselemente 20 begrenzt sein kann. Entsprechende sich zwischen jeweiligen Diffusorelementen 15 erstreckend angeordnete oder ausgebildete Wandungselemente 20 dienen der weiteren räumlichen Begrenzung jeweiliger Strömungsräume 17.

Die Wandungselemente 20 können in wenigstens einem Bewegungsfreiheitsgrad bewegbar relativ zueinander und/oder relativ zu wenigstens einem Diffusorelement 15 gelagert sein. In dem in Fig. 5 gezeigten Ausführungsbeispiel sind die Wandungselemente 20 um eine horizontale Kipp- bzw. Schwenkachse kipp- bzw. schwenkbar gelagert. Die Wandungselemente 20 sind hierfür kipp- bzw. schwenkbar an Anlenkpunkten 21 eines, d. h. des linken, Diffusorelements 15 angelenkt. Die Wandungselemente 20 können an dem diesem Diffusorelement 15 nachgeschalteten Diffusorelement 15 vertikal geführt sein. Wie strichliert dargestellt, können durch entsprechende Kipp- bzw. Schwenkbewegungen des Wandlungselements 20 trichterförmig verlaufende Strömungsräume 17 ausgebildet werden. Über sich trichterförmig erweiternde oder reduzierende Strömungsräume 17 lässt sich gezielt Einfluss auf diverse Strömungsparameter der Fluidströmung 10, insbesondere die Art der Strömung und die Strömungsgeschwindigkeit, nehmen.

Für alle Ausführungsbeispiele gilt, dass die Steuereinrichtung 13 auch zur Steuerung von Bewegungen bewegbar gelagerter Erfassungselemente 12a und/oder zur Steuerung von Bewegungen bewegbar gelagerter Wandungselemente 20, insbesondere in Abhängigkeit der erfassten Strömungsinformation, eingerichtet sein kann.

Mit den in den Fig. gezeigten Vorrichtungen 1 lässt sich ein Verfahren zur generativen Herstellung wenigstens eines Objekts 2 durch sukzessive schichtweise selektive Verfestigung einzelner Baumaterialschichten aus verfestigbarem Baumaterial 3 vermittels eines Energiestrahls 5 implementieren. Das Verfahren zeichnet sich dadurch aus, dass vermittels der Erfassungseinrichtung 12 entsprechende Strömungsinformationen erfasst werden.

## Patentansprüche

1. Vorrichtung (1) zur generativen Herstellung eines dreidimensionalen Objekts (2), umfassend
eine Prozesskammer (8);
eine Energiestrahlerzeugungseinrichtung, welche zur Erzeugung eines Energiestrahls zur selektiven sukzessiven Verfestigung von Baumaterialschichten eingerichtet ist,
eine Strömungseinrichtung (9), welche zur Erzeugung einer eine Prozesskammer (8) der Vorrichtung (1) zumindest abschnittsweise durchströmenden Fluidströmung (10) eingerichtet ist;
eine Erfassungseinrichtung (12) zur Erfassung einer wenigstens einen physikalischen Parameter und/oder wenigstens einen chemischen Parameter der Fluidströmung (10) beschreibenden Strömungsinformation;
ein Diffusorelement zur Erzeugung eines gleichmäßigen oder vergleichmäßigten, insbesondere laminaren, Strömungsprofils der Fluidströmung (10); und
eine Regel- und/oder Steuereinrichtung, welche zur Regelung oder Steuerung einer Bewegung des Diffusorelements in wenigstens einem Bewegungsfreiheitsgrad oder zur Regelung oder Steuerung des Betriebs der Strömungseinrichtung und zur Regelung oder Steuerung einer Bewegung des Diffusorelements in wenigstens einem Bewegungsfreiheitsgrad in Abhängigkeit einer von der Erfassungseinrichtung (12) erfassten Strömungsinformation eingerichtet ist.

2. Vorrichtung nach Anspruch 1, wobei die Erfassungseinrichtung (12) ein in der Prozesskammer (8) anordenbares oder angeordnetes Erfassungselement umfasst.

3. Vorrichtung nach Anspruch 1 oder 2, wobei die Strömungsinformation Dichte, Druck und/oder Temperatur der Fluidströmung beschreibt.

4. Vorrichtung nach einem der Ansprüche 1 bis 3, wobei das bzw. ein Erfassungselement in wenigstens einem Bewegungsfreiheitsgrad bewegbar gelagert ist, wobei das Erfassungselement in dem wenigstens einen Bewegungsfreiheitsgrad in eine erste Position innerhalb der Prozesskammer (8) und in eine zweite Position innerhalb oder außerhalb der Prozesskammer (8) bewegbar ist.

5. Vorrichtung nach einem der Ansprüche 1 bis 4, dass das wenigstens eine Diffusorelement (15) zwischen einer Position innerhalb der Prozesskammer (8), bei welcher Position es sich um eine Betriebsposition, in welcher eine Vergleichmäßigung der Fluidströmung (10) durch das Diffusorelement (15) möglich ist, handelt, und einer Position außerhalb oder innerhalb der Prozesskammer (8), bei welcher Position es sich um eine Nicht-Betriebsposition, in welcher eine Vergleichmäßigung der Fluidströmung (10) durch das Diffusorelement (15) nicht möglich ist, handelt, bewegbar gelagert ist.

6. Vorrichtung nach einem der Ansprüche 2 bis 5, wobei das wenigstens eine Erfassungselement gemeinsam mit einer in wenigstens einem Bewegungsfreiheitsgrad bewegbar gelagerten Beschichtereinrichtung bewegbar ist.

7. Vorrichtung nach einem der Ansprüche 1 bis 6, wobei das Diffusorelement mehrere von einem Strömungsfluid durchströmbare Strömungsöffnungen in einer Wabenanordnung aufweist.

8. Vorrichtung nach einem der Ansprüche 1 bis 7, umfassend mehrere Diffusorelemente, welche jeweils mehrere von einem Strömungsfluid durchströmbare Strömungsöffnungen zur Vergleichmäßigung eines Strömungsfluids aufweist, wobei die Diffusorelemente in Reihe geschaltet hintereinander angeordnet sind, wobei zwischen zwei benachbart angeordneten Diffusorelementen ein Strömungsraum gebildet ist.

9. Vorrichtung nach einem der Ansprüche 1 bis 8, umfassend ein erstes und ein zweites Diffusorelement, wobei das erste Diffusorelement in wenigstens einem Bewegungsfreiheitsgrad relativ zu dem zweiten Diffusorelement bewegbar gelagert ist, wobei das erste Diffusorelement stromaufwärts oder stromabwärts des zweiten Diffusorelements benachbart zu diesem angeordnet ist, wobei das erste Diffusorelement bewegbar ist, um das Volumen eines zwischen dem ersten und dem zweiten Diffusorelement gebildeten Strömungsraums zu verändern.

10. Vorrichtung nach Anspruch 9, umfassend ein oder mehrere Wandungselemente, welche sich seitlich zwischen dem ersten Diffusorelement und dem zweiten Diffusorelement erstrecken, wobei das eine oder die mehreren Wandungselemente in wenigstens einem Bewegungsfreiheitsgrad bewegbar gelagert sind.

11. Vorrichtung nach einem der Ansprüche 1 bis 10, umfassend eine eine Ausgabeeinrichtung (14) zur, insbesondere optischen, Ausgabe wenigstens einer die über die Erfassungseinrichtung (12) erfassten Strömungsinformationen visualisierenden Visualisierungsinformation.

12. Verfahren zur generativen Herstellung eines dreidimensionalen Objekts (2), durch sukzessive schichtweise selektive Verfestigung einzelner Baumaterialschichten aus verfestigbarem Baumaterial vermittels eines Energiestrahls, umfassend
- Erzeugen einer eine Prozesskammer (8) einer Vorrichtung (1) nach einem der vorangehenden Ansprüche zur generativen Herstellung eines dreidimensionalen Objekts (2) zumindest abschnittsweise durchströmenden Fluidströmung (10);
- Erfassen einer wenigstens einen physikalischen Parameter und/oder wenigstens einen chemischen Parameter der Fluidströmung (10) beschreibenden Strömungsinformation;
- Erzeugen eines gleichmäßigen oder vergleichmäßigten, insbesondere laminaren, Strömungsprofils der Fluidströmung (10);
- Regeln bzw. Steuern einer Bewegung des Diffusorelements in wenigstens einem Bewegungsfreiheitsgrad oder
Regeln bzw. Steuern des Betriebs der Strömungseinrichtung und von Bewegungen bewegbar gelagerter Diffusorelemente in Abhängigkeit einer von der Erfassungseinrichtung (12) erfassten Strömungsinformation.

## Claims

1. Device (1) for generative manufacture of a three-dimensional object (2), comprising
a process chamber (8);
an energy beam generation means which is configured for generating an energy beam for selective successive consolidation of build material layers,
a flow means (9) which is configured for generating a fluid flow (10) flowing through a process chamber (8) of the device (1) at least in sections;
a detection means (12) for detecting an item of flow information describing at least one physical parameter and/or at least one chemical parameter of the fluid flow (10);
a diffuser element for generating a uniform or homogenized, in particular laminar, flow profile of the fluid flow (10); and
a regulation and/or control means which is configured to regulate or control a movement of the diffuser element in at least one degree of freedom of movement or to regulate or control the operation of the flow means and to regulate or control a movement of the diffuser element in at least one degree of freedom of movement depending on the item of flow information detected by the detection means (12).

2. Device according to claim 1, wherein the detection means (12) comprises a detection element arrangeable or arranged in the process chamber (8).

3. Device according to claim 1 or 2, wherein the flow information describes the density, pressure and/or temperature of the fluid flow.

4. Device according to any one of claims 1 to 3, wherein the or a detection element is mounted so as to be movable in at least one degree of freedom of movement, wherein the detection element is movable in the at least one degree of freedom of movement into a first position inside the process chamber (8) and into a second position inside or outside the process chamber (8).

5. Device according to any one of claims 1 to 4, wherein the at least one diffuser element (15) is movably mounted between a position inside the process chamber (8), which position is an operating position in which homogenization of the fluid flow (10) through the diffuser element (15) is possible, and a position outside or inside the process chamber (8), which position is a non-operating position in which homogenization of the fluid flow (10) through the diffuser element (15) is not possible, and a position outside or inside the process chamber (8), which position is a non-operating position in which homogenization of the fluid flow (10) through the diffuser element (15) is not possible.

6. Device according to any one of claims 2 to 5, wherein the at least one detection element is movable in conjunction with a coater means mounted so as to be movable in at least one degree of freedom of movement.

7. Device according to any one of claims 1 to 6, wherein the diffuser element comprises a plurality of flow openings, through which a flow medium can flow, in a honeycomb arrangement.

8. Device according to any one of claims 1 to 7, comprising a plurality of diffuser elements which each comprise a plurality of flow openings, through which a flow medium can flow, in order to homogenize a flow medium, wherein the diffuser elements are arranged in series one behind the other, wherein a flow space is formed between two adjacently arranged diffuser elements.

9. Device according to any one of claims 1 to 8, comprising a first and a second diffuser element, wherein the first diffuser element is mounted so as to be movable in at least one degree of freedom of movement relative to the second diffuser element, wherein the first diffuser element is arranged upstream or downstream of the second diffuser element adjacent thereto, wherein the first diffuser element is movable to alter the volume of a flow space formed between the first and second diffuser elements.

10. Device according to claim 9, comprising one or more wall members extending laterally between the first diffuser element and the second diffuser element, wherein the one or more wall members are mounted so as to be movable in at least one degree of freedom of movement.

11. Device according to any one of claims 1 to 10, comprising an output means (14) for outputting, in particular optically, at least one item of visualization information visualizing the flow information detected by the detection means (12).

12. Method for generative manufacture of a three-dimensional object (2) by successive layerwise selective consolidation of individual build material layers from consolable build material by means of an energy beam, comprising
- generating a fluid flow (10) flowing at least in sections through a process chamber (8) of a device (1) according to any one of the preceding claims for generative manufacture of a three-dimensional object (2);
- detecting an item of flow information describing at least one physical parameter and/or at least one chemical parameter of the fluid flow (10);
- generating a uniform or homogenized, in particularly laminar, flow profile of the fluid flow (10);
- regulating or controlling a movement of the diffuser element in at least one degree of freedom of movement or regulating or controlling the operation of the flow means and the movements of movably mounted diffuser elements depending on an item of flow information detected by the detection means (12).

## Revendications

1. Dispositif (1) pour la fabrication générative d'un objet tridimensionnel (2), comprenant
une chambre de traitement (8) ;
un appareil de production de faisceau d'énergie, qui est adapté pour produire un faisceau d'énergie pour la solidification sélective successive de couches de matériau de construction,
un appareil d'écoulement (9), qui est adapté pour produire un écoulement de fluide (10) traversant au moins par sections une chambre de traitement (8) du dispositif (1) ;
un appareil de détection (12) pour détecter une information d'écoulement décrivant au moins un paramètre physique et/ou au moins un paramètre chimique de l'écoulement de fluide (10) ;
un élément diffuseur pour produire un profil d'écoulement uniforme ou uniformisé, notamment laminaire, de l'écoulement de fluide (10) ; et
un appareil de régulation et/ou de commande qui est adapté pour la régulation ou la commande d'un mouvement de l'élément diffuseur dans au moins un degré de liberté de mouvement ou pour la régulation ou la commande du fonctionnement de l'appareil d'écoulement et pour la régulation ou la commande d'un mouvement de l'élément diffuseur dans au moins un degré de liberté de mouvement en fonction d'une information d'écoulement détectée par l'appareil de détection (12).

2. Dispositif selon la revendication 1, dans lequel l'appareil de détection (12) comprend un élément de détection pouvant être agencé ou étant agencé dans la chambre de traitement (8).

3. Dispositif selon la revendication 1 ou 2, dans lequel l'information d'écoulement décrit la densité, la pression et/ou la température de l'écoulement de fluide.

4. Dispositif selon l'une quelconque des revendications 1 à 3, dans lequel le ou un élément de détection est monté de manière mobile dans au moins un degré de liberté de mouvement, l'élément de détection étant mobile dans l'au moins un degré de liberté de mouvement dans une première position à l'intérieur de la chambre de traitement (8) et dans une deuxième position à l'intérieur ou à l'extérieur de la chambre de traitement (8).

5. Dispositif selon l'une quelconque des revendications 1 à 4, dans lequel l'au moins un élément diffuseur (15) est monté de manière mobile entre une position à l'intérieur de la chambre de traitement (8), laquelle position consistant en une position de fonctionnement dans laquelle une uniformisation de l'écoulement de fluide (10) à travers l'élément diffuseur (15) est possible, et une position à l'extérieur ou à l'intérieur de la chambre de traitement (8), laquelle position consistant en une position de non-fonctionnement dans laquelle une uniformisation de l'écoulement de fluide (10) à travers l'élément diffuseur (15) n'est pas possible.

6. Dispositif selon l'une quelconque des revendications 2 à 5, dans lequel l'au moins un élément de détection est mobile conjointement avec un appareil de revêtement monté de manière mobile dans au moins un degré de liberté de mouvement.

7. Dispositif selon l'une quelconque des revendications 1 à 6, dans lequel l'élément diffuseur présente plusieurs ouvertures d'écoulement pouvant être traversées par un fluide d'écoulement, dans un agencement en nid d'abeilles.

8. Dispositif selon l'une quelconque des revendications 1 à 7, comprenant plusieurs éléments diffuseurs qui présentent chacun plusieurs ouvertures d'écoulement pouvant être traversées par un fluide d'écoulement pour l'uniformisation d'un fluide d'écoulement, les éléments diffuseurs étant agencés en série les uns derrière les autres, un espace d'écoulement étant formé entre deux éléments diffuseurs agencés de manière voisine.

9. Dispositif selon l'une quelconque des revendications 1 à 8, comprenant un premier et un deuxième élément diffuseur, le premier élément diffuseur étant monté de manière mobile dans au moins un degré de liberté de mouvement par rapport au deuxième élément diffuseur, le premier élément diffuseur étant agencé en amont ou en aval du deuxième élément diffuseur de manière voisine de celui-ci, le premier élément diffuseur étant mobile pour modifier le volume d'un espace d'écoulement formé entre le premier et le deuxième élément diffuseur.

10. Dispositif selon la revendication 9, comprenant un ou plusieurs éléments de paroi s'étendant latéralement entre le premier élément diffuseur et le deuxième élément diffuseur, le ou les éléments de paroi étant montés de manière mobile dans au moins un degré de liberté de mouvement.

11. Dispositif selon l'une quelconque des revendications 1 à 10, comprenant un appareil de sortie (14) pour la sortie, notamment optique, d'au moins une information de visualisation visualisant les informations d'écoulement détectées par l'appareil de détection (12).

12. Procédé de fabrication générative d'un objet tridimensionnel (2), par solidification sélective successive couche par couche de couches individuelles de matériau de construction à partir de matériau de construction solidifiable, au moyen d'un faisceau d'énergie, comprenant
- la production d'un écoulement de fluide (10) traversant au moins par sections une chambre de traitement (8) d'un dispositif (1) selon l'une quelconque des revendications précédentes pour la fabrication générative d'un objet tridimensionnel (2) ;
- la détection d'une information d'écoulement décrivant au moins un paramètre physique et/ou au moins un paramètre chimique de l'écoulement de fluide (10) ;
- la production d'un profil d'écoulement uniforme ou uniformisé, notamment laminaire, de l'écoulement de fluide (10) ;
- la régulation ou la commande d'un mouvement de l'élément diffuseur dans au moins un degré de liberté de mouvement ou la régulation ou la commande du fonctionnement de l'appareil d'écoulement et des mouvements d'éléments diffuseurs montés de manière mobile en fonction d'une information d'écoulement détectée par l'appareil de détection (12).
